# EUROPEAN PATENT SPECIFICATION

(11) **EP 1 887 734 B1**
(45) Date of publication and mention of the grant of the patent: **16.02.2011**
(21) Application number: 07015531.2
(22) Date of filing: 07.08.2007
(51) Int. Cl.: H04L 12/26

(54) **Method of measuring variance of data payload in wireless communications system and related apparatus**
Verfahren zur Messung der Varianz einer Datennutzlast in einem drahtlosen Kommunikationssystem und entsprechende Vorrichtung
Procédé pour la mesure de la variance de la charge de données dans un système de communications sans fil et appareil correspondant

(30) Priority: 07.08.2006 US 835880 P
(43) Date of publication of application: 13.02.2008
(73) Proprietor: Innovative Sonic Limited, Tortola (VG)
(72) Inventor: Tseng, Li-Chih, Taipei City (TW)
(74) Representative: Schaeberle, Steffen

(56) References cited:
- EP-A- 1 233 582
- EP-A1- 1 156 602
- JP-A- 5 045 325
- JP-A- 2000 098 345
- ETSI-3GPP: "Universal Mobile Telecommunications System (UMTS); Radio Resource Control (RRC); Protocol specification (3GPP TS 25.331 version 7.1.0 Release 7)" TECHNICAL SPECIFICATION, [Online] June 2006 (2006-06), XP002450722 Retrieved from the Internet: URL:http://webapp.etsi.org/exchangefolder/ ts_125331v070100p.pdf> [retrieved on 2007-09-11]

## Description

The present invention relates to a method of measuring variance of a data payload for a wireless communications system and a related communications device according to the pre-characterizing clause of the independent claims.

XP-002450722 discloses a technical specification for: "Universal Mobile Telecommunications System (UMTS); Radio Resource Control (RRC); Protocol specification (3GPP TS 25.331 version 7.1.0 Release 7)". Technical specification retrieved from URL: http: //webapp.etsi.org/ exchangefolder/ts_125331 v0701 00p.pdf

EP 1 156 602 A1 discloses a method for controlling transmission power for communication systems. Thereby a likelihood of transmit power controlling signals is generated on the basis of the transmit power controlling signals transmitted by a radio base station and the receiving quality. A variation amount of the transmit power is generated on the basis of the generated likelihood.

JP 05 045325 A discloses an oxygen-concentration detecting apparatus. Thereby, the time change of an output of an oxygen sensor is corrected by a reference value, wherein the reference value is a measured value.

JP 2000 098345 A discloses a liquid crystal display device (LCD). The fluctuation in display density due to temperature change of an LCD display is corrected by a reference value. The reference value is increased or decreased in accordance with a measured result of a temperature sensor.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, providing these functions under limited resources relies on proper resource allocation. Thus, targeting third generation mobile telecommunication technology, the prior art provides a traffic volume measurement (TVM) mechanism, which is used to obtain instant transmission status and resource utilization to realize dynamic radio resource control.

According to a medium access control (MAC) specification 3GPP TS 25.321 V7.1.0, defined by the 3rd Generation Partnership Project (3GPP), in an acknowledged or unacknowledged mode (AM or UM), a radio resource control (RRC) layer performs a TVM process that requires the MAC layer to measure traffic volume information during at least a transmission time interval (TTI) and then report measurement results to the RRC layer. During the TVM process, the RRC layer configures the MAC layer to keep track of statistics on buffer occupancy (BO) of radio link control (RLC) entities. With the BO, the RRC layer can obtain transmission statuses in the RLC layer. According to Section 11.1, the RRC layer requests the MAC layer report with a primitive CMAC-Measure-REQ, including a reporting quantity identifier and a time interval. The reporting quantity identifier indicates what should be reported to the RRC layer, such as the BO, average of the BO, or variance of the BO. if either of the average of the BO and variance of the BO is required, the -MAC layer calculates the average or variance of the BO during the time interval based on one sample of the BO per 10 microseconds. In addition, the MAC-layer receives RLC packet data units (PDUs) with a primitive MAC-Data-REQ including the BO, which indicates for each logic channel the amount of data in number of bytes that is available for transmissions and retransmissions in the RLC layer.

The RRC specification 3GPP TS 25.331 V7.1.0 defines an information element (IE) named traffic volume measured result list.

Three IEs, RLC Buffers Payload, Average of RLC Buffer Payload and Variance of RLC Buffer Payload are included in the traffic volume measured result list IE and provided with reference values, respectively. The Variance of RLC Buffer Payload IE has variance reference values of 0, 4, 8, ... 1024, 2K, 4K, 8K and 16K Bytes, where K is 1024. When the variance of the BO is reported from the MAC layer, the RRC layer rounds the variance of the BO upwards to the closest variance reference value and further reports the closest variance reference value to an upper layer for dynamic radio resource control. Assuming that the variance of the BO is reported with a value of 1 5.8K, the RRC layer rounds 15.8K upwards to 1 6K and then reports 16K to the upper layer. As known from the above, a rational measurement of the variance of the BO must not be over 16K. However, if the MAC layer takes seven BO samples of 0.25K, 0.5K, 2K, 4K, 7K, 9K and 10K during the given time interval, the variance of the samples is calculated to be 16.18K. In this situation, since the reporting variance of the BO is greater than the maximum variance reference value, no variance reference values are available for the reporting variance of the BO to round upwards to, resulting in TVM errors.

This in mind, the present invention aims at a method of measuring variance of a data payload for a wireless communications system and a related communications device that can prevent traffic volume measurement (TVM) errors or reduce probability of the TVM errors so as to improve radio resource allocation.

This is achieved by method for measuring variance of a data payload for a wireless communications system and related communications device according to the independent claims. The dependent claims pertain to corresponding further developments and improvements.

As will be seen more clearly from the detailed description following below, the claimed method for measuring variance of a data payload for a wireless communications system and related communications device includes predetermining plural variance reference values; receiving a variance measurement result; and rounding the variance measurement result downwards to a maximum variance reference value of the plural variance reference values if the variance measurement result is greater than the plural variance reference values.

In the following, the invention is further illustrated by way of example, taking reference to the accompanying drawings. Thereof
Fig. 1 is a function block diagram of a wireless communications device.
Fig. 2 is a diagram of program code of Fig. 1.
Figs. 3 is a flowcharts of a process according to an embodiment of the present invention.
Figs. 4-6 are further examples of flowcharts of a process.

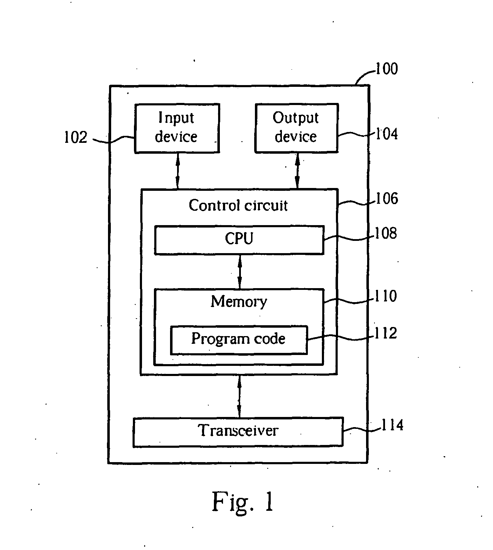

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling operation of the communications device 100. The communications device 100 can receive signals input by a user through the input device 102, such as a keyboard, and can output images and sounds through the output device 104, such as a monitor or speakers.

The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is applied to the third generation telecommunications system.

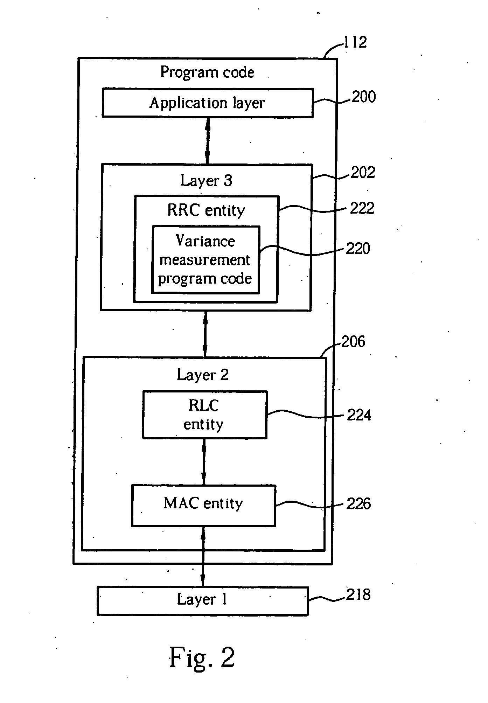

Please continue to refer to Fig. 2, which is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. The MAC entity 226 exchanges signals and protocol data units (PDUs) with the RLC entity 224 through logic channels. The Layer 3 202 includes a radio resource control (RRC) entity 222 utilized to request the MAC entity 226 to perform traffic volume measurement (TVM) and report back with measurement results. During the TVM, the MAC entity obtains information about data payload of related buffers from RLC PDUs and thereby performs measurement calculation. A buffer occupancy (BO) parameter is utilized to notify states of the data payload of the RLC buffers, and the detailed description thereof has been described in the foregoing. The required measurement results may include BO, average of BO, or variance of BO. According to the measurement results reported from the MAC entity 226, the RRC entity 222 may perform radio resource allocation to the Layer 1 218 and the Layer 2 206. Furthermore, the MAC entity 226 can perform channel mapping, multiplexing, transport format selection, or random access control according to Layer 3 202 resource allocation signaling.

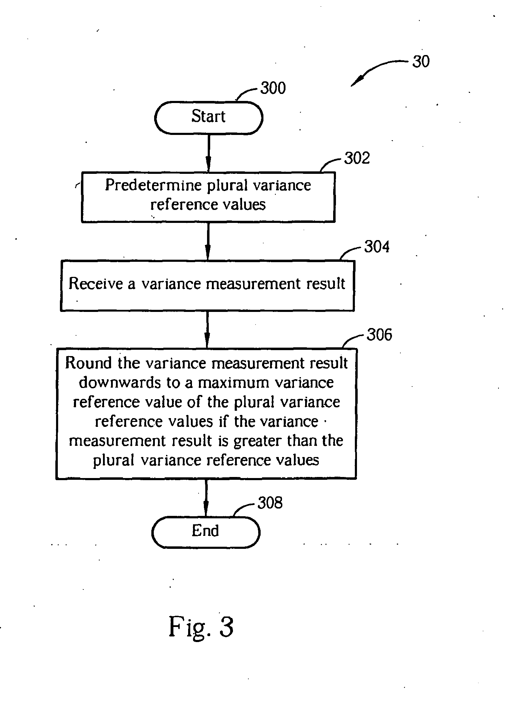

The embodiment of the present invention provides a variance measurement program code 220 to prevent TVM errors and further improve radio resource allocation. Please refer to Fig. 3, which is a flowchart of a process 30 according to an embodiment of the present invention. The process 30 can be compiled into the variance measurement program code 220 and includes the following steps:
Step 300: Start.
Step 302: Predetermine plural variance reference values.
Step 304: Receive a variance measurement result.
Step 306: Round the variance measurement result downwards to a maximum variance reference value of the plural variance reference values if the variance measurement result is greater than the plural variance reference values.
Step 308: End.

According to the process 30, the RRC layer predetermines the plural variance reference values before the TVM is performed. Preferably, the plural variance reference values have a maximum variance reference value of 16K (K=1024) and a minimum variance reference value of 0. The plural variance reference values other than the minimum variance reference value form a geometric sequence. For example, the variance reference values are predetermined to be 0, 4, 8, ...1024, 2K, 4K, 8K and 16K. If the variance measurement result is less than the maximum variance reference value of 16K, the variance measurement result is rounded upwards to the closest variance reference value. Assuming that the variance measurement result reported from the MAC layer is 7K, the RRC layer rounds 7K upwards to 8K. Contrarily, if BO samples are taken to be 0.25K, 0.5K, 2K, 4K, 7K, 9K and 10K Bytes in the MAC layer, the variance measurement result is 16.8K. In this situation, 16.8K will be rounded downwards to 16K. Thus, the process 30 can prevent TVM errors.

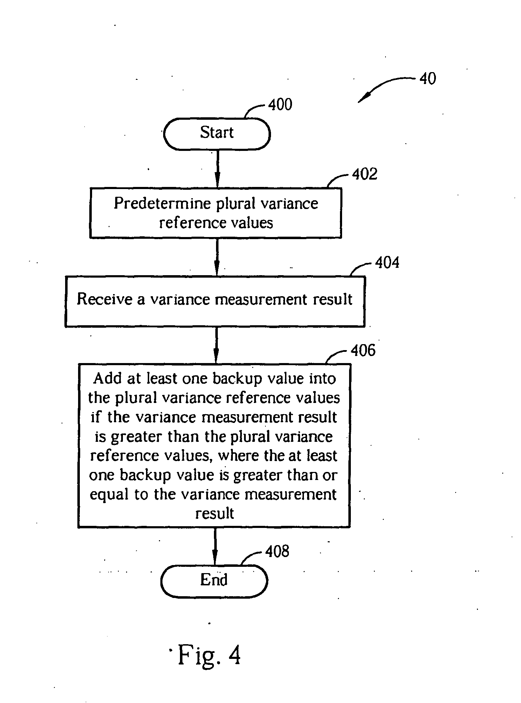

Please refer to Fig. 4, which is a flowchart of a process 40. The process 40 can be compiled into the variance measurement program code 220 and includes the following steps:
Step 400: Start.
Step 402: Predetermine plural variance reference values.
Step 404: Receive a variance measurement result.
Step 406: Add at least one backup value into the plural variance reference values if the variance measurement result is greater than the plural variance reference values, where the at least one backup value is greater than or equal to the variance measurement result.
Step 408: End.

According to the process 40, the RRC layer predetermines the plural variance reference values before the TVM is performed. Preferably, the predetermined-variance reference values have a maximum variance reference value of 16K (K=1024) and a minimum variance reference value of 0. The predetermined variance reference values other than the minimum variance reference value form a geometric sequence. For example, the variance reference values are predetermined to be 0, 4, 8, ...1024, 2K, 4K, 8K and 16K. If the variance measurement result is less than the maximum variance reference value of 16K, the variance measurement result is rounded upwards to the closest variance reference value. Assuming that the variance measurement result reported from the MAC layer is 7K, the RRC layer rounds 7K upwards to 8K. Contrarily, if BO samples are taken to be 0.25K, 0.5K, 2K, 4K, 7K, 9K and 10K Bytes in the MAC layer, the variance measurement result is 16.8K. In this situation, at least one backup value is added into the variance reference values before the variance measurement result is rounded. For example, the added backup values can be 18K and 20K. Thus, the variance measurement result is rounded upwards to 18K. Alternatively, the variance measurement result can be considered as the backup value to add into the variance reference values.

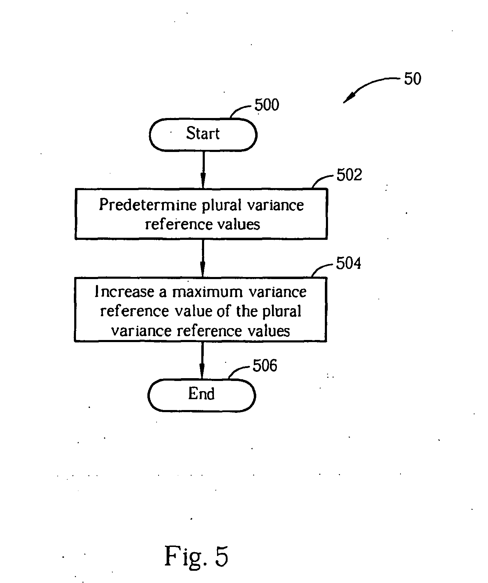

Please refer to Fig. 5, which is a flowchart of a process 50. The process 50 can be compiled into the variance measurement program code 220 and includes the following steps:
Step 500: Start.
Step 502: Predetermine plural variance reference values.
Step 504: Increase a maximum variance reference value of the plural variance reference values.
Step 506: End.

According to the process 50, the RRC layer predetermines the plural variance reference values before the TVM is performed. Preferably, the predetermined variance reference values have a maximum variance reference value of 16K (K= 1024) and a minimum variance reference value of 0. The predetermined variance reference values other than the minimum variance reference value form a geometric sequence. For example, the variance reference values are predetermined to be 0, 4, 8, ...1024, 2K, 4K, 8K and 16K. The maximum variance reference value is then increased from 16K to 18K. When a variance measurement result is reported from the MAC layer, the RRC layer rounds upwards according to the variance reference values of 0, 4, 8, ...1024, 2K, 4K, 8K and 18K. If the variance measurement result is 7K, 7K will be rounded upwards to 8K. If the variance measurement result is 16.8K, 1 6.8K will be rounded upwards to 18K. The process 50 expands the acceptable range for the variance measurement result to reduce the probability that the reported variance measurement result is greater than the maximum variance reference value.

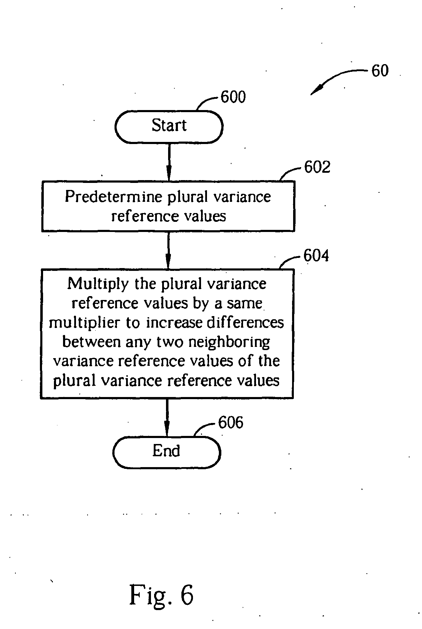

Please refer to Fig. 6, which is a flowchart of a process 60. The process 60 can be compiled into the variance measurement program code 220 and includes the following steps:
Step 600: Start.
Step 602: Predetermine plural variance reference values.
Step 604: Multiply the plural variance reference values by a same multiplier to increase differences between any two neighboring variance reference values of the plural variance reference values.
Step 606: End.

According to the process 60, the RRC layer predetermines the plural variance reference values before the TVM is performed. Preferably, the predetermined variance reference values have a maximum variance reference value of 16K (K=1024) and a minimum variance reference value of 0. The predetermined variance reference values other than the minimum variance reference value form a geometric sequence. For example, the variance reference values are predetermined to be 0, 4, 8, ...1024, 2K, 4K, 8K and 16K. The variance reference values are then multiplied by a same multiplier. For example, the multiplier is set to be 2, the variance reference values become 0, 8, 16, ...2K, 4K, 8K, 16K and 32K. When a variance measurement result is reported from the MAC layer, the RRC layer will round the variance measurement result upwards to the closest variance reference value. For example, if the variance measurement result is 7K, 7K will be rounded upwards to 8K. If the variance measurement result is 16.8K, 16.8K will be rounded upwards to 32K. Thus, by expanding the differences between any two neighboring variance reference values, the process 60 can reduce the probability that the reported variance measurement result is greater than the maximum variance reference value.

To summarize, according to the prior art, the maximum variance reference value of 1 6K may be too small to apply to certain communications environments. It is likely that the reported variance measurement result is greater than the maximum variance reference value, which results in the TVM errors. In the embodiment of the present invention, the processes 30 can prevent occurrence of the situation. Also the process 40 can prevent occurrence of the situation. The processes 50 and 60 can reduce probability of occurrence of the situation.

## Claims

1. A method of measuring variance of a data payload for a wireless communications system, the method comprising:
predetermining plural variance reference values for a variance of a buffer occupancy, wherein the buffer occupancy indicates the amount of data in number of bytes that is available for transmission and retransmission in each logical channel in the RLCV (Radio Link Control) layer of a wireless communication device (302); and
receiving a variance measurement result for the buffer occupancy in the RLC-layer from the MAC (Medium Access Control) layer (304);
rounding in the RRC (Radio Resource Control) layer of the wireless communication device the variance measurement result downwards to a maximum variance reference value of the plural variance reference values if the variance measurement result is greater than the maximum variance reference value (306), and
rounding in the RRC layer of the wireless communication device the variance measurement result upwards to the closest variance reference value of the plural variance reference values if the variance measurement result is less than the maximum variance reference value of the plural variance reference values reporting the rounded variance measurement result to an upper layer for dynamic
radio resource control.

2. The method of claim 1 **characterized in that** the variance measurement result is obtained by measuring a variance of data stored in a buffer of a radio link control entity.

3. The method of claim 1 **characterized in that** the maximum variance reference value of the plural variance reference values is 16K Bytes, and K is 1024.

4. The method of claim 1 **characterized in that** the plural variance reference values have a minimum variance reference value of 0, and the plural variance reference values other than the minimum variance reference value form a

5. The method of claim 1 **characterized in that** the wireless communications system is a third generation wireless communications system.

6. A communications device (100) utilized in a wireless communications system for measuring variance of a data payload to prevent traffic volume measurement errors, the communications device comprising:
a control circuit (106) for realizing functions of the communications device;
a central processing unit (108) installed in the control circuit for executing program codes to operate the control circuit; and
a memory (110) coupled to the central processing unit for storing the program code;
**characterized in that** the program code comprises:
predetermining plural variance reference values for a variance of a buffer occupancy, wherein the buffer occupancy indicates the amount of data in number of bytes that is available for transmission and retransmission in each logical channel in the RLC layer of a wireless communication device (302);
receiving a variance measurement result for the buffer occupancy in the RLC-layer from the MAC layer (304);
rounding in the RRC layer of the wireless communication device the variance measurement result downwards to a maximum variance reference value of the plural variance reference values if the variance measurement result is greater than the maximum variance reference value (306), and
rounding in the RRC layer of the wireless communication device the variance measurement result upwards to the closest variance reference value of the plural variance reference values if the variance measurement result is less than the maximum variance reference value of the plural variance reference values
reporting the rounded variance measurement result to an upper layer for dynamic radio resource control.

7. The communications device of claim 6 **characterized in that** the variance measurement result is obtained by measuring a variance of data stored in a

8. The communications device of claim 6 **characterized in that** the maximum variance reference value of the plural variance reference values is 16K Bytes, and K is 1024.

9. The communications device of claim 6 **characterized in that** the plural variance reference values have a minimum variance reference value of 0, and the plural variance reference values other than the minimum variance reference value form a geometric sequence.

10. The communications device of claim 6 **characterized in that** the wireless communications system is a third generation wireless communications system.

## Patentansprüche

1. Verfahren zur Messung einer Varianz einer Datennutzlast für ein drahtloses Kommunikationssystem, wobei das Verfahren umfasst:
Vorbestimmen von mehreren Varianz-Referenzwerten für eine Varianz einer Pufferspeicherbelegung, wobei die Pufferspeicherbelegung die Menge von Daten in einer Anzahl von Bytes anzeigt, die für eine Übertragung und erneute Übertragung in jedem logischen Kanal in der RLC-Schicht (RLC - Radio Link Control) einer drahtlosen Kommunikationsvorrichtung verfügbar ist (302); und
Empfangen eines Varianz-Messergebnisses für die Pufferspeicherbelegung in der RLC-Schicht von der MAC-Schicht (MAC - Medium Access Control) (304);
Abrunden des Varianz-Messergebnisses auf einen maximalen Varianz-Referenzwert der mehreren Varianz-Referenzwerte in der RRC-Schicht (RRC - Radio Resource Control) der drahtlosen Kommunikationsvorrichtung, wenn das Varianz-Messergebnis größer als der maximale Varianz-Referenzwert ist (306),
und
Aufrunden des Varianz-Messergebnisses auf den nächstliegenden Varianz-Referenzwert der mehreren Varianz-Referenzwerte in der RRC-Schicht der drahtlosen Kommunikationsvorrichtung, wenn das Varianz-Messergebnis geringer als der maximale Varianz-Referenzwert der vielen Varianz-Referenzwerte ist,
Berichten des gerundeten Varianz-Messergebnisses an eine obere Schicht für eine dynamische Funkressourcensteuerung.

2. Verfahren nach Anspruch 1, **dadurch gekennzeichnet, dass** das Varianz-Messergebnis durch Messen einer Varianz von Daten, die in einem Pufferspeicher einer RLC-Einheit gespeichert sind, erhalten wird.

3. Verfahren nach Anspruch 1, **dadurch gekennzeichnet, dass** der maximale Varianz-Referenzwert der mehreren Varianz-Referenzwerte 16 KByte ist und K gleich 1024 ist.

4. Verfahren nach Anspruch 1, **dadurch gekennzeichnet, dass** die mehreren Varianz-Referenzwerte einen minimalen Varianz-Referenzwert von 0 aufweisen und die sich von dem minimalen Varianz-Referenzwert unterscheidenden mehreren Varianz-Referenzwerte eine geometrische Sequenz bilden.

5. Verfahren nach Anspruch 1, **dadurch gekennzeichnet, dass** das drahtlose Kommunikationssystem ein drahtloses Kommunikationssystem der dritten Generation ist.

6. Kommunikationsvorrichtung (100), verwendet in einem drahtlosen Kommunikationssystem, zum Messen einer Varianz einer Datennutzlast, um Verkehrsmengen-Messfehler zu vermeiden, wobei die Kommunikationsvorrichtung umfasst:
eine Steuerschaltung (106) zum Realisieren von Funktionen der Kommunikationsvorrichtung;
eine zentrale Recheneinheit (108), die in der Steuerschaltung integriert ist, um Programmcodes auszuführen, um die Steuerschaltung zu betätigen; und
einen Speicher (110), der mit der zentralen Recheneinheit verbunden ist, um den Programmcode zu speichern;
**dadurch gekennzeichnet, dass** der Programmcode umfasst:
Vorbestimmen von mehreren Varianz-Referenzwerten für eine Varianz einer Pufferspeicherbelegung, wobei die Pufferspeicherbelegung die Menge von Daten in einer Anzahl von Bytes anzeigt, die für eine Übertragung und erneute Übertragung in jedem logischen Kanal in der RLC-Schicht einer drahtlosen Kommunikationsvorrichtung verfügbar ist (302);
Empfangen eines Varianz-Messergebnisses für die Pufferspeicherbelegung in der RLC-Schicht von der MAC-Schicht (304);
Abrunden des Varianz-Messergebnisses auf einen maximalen Varianz-Referenzwert der mehreren Varianz-Referenzwerte in der RRC-Schicht der drahtlosen Kommunikationsvorrichtung, wenn das Varianz-Messergebnis größer als der maximale Varianz-Referenzwert ist (306), und
Aufrunden des Varianz-Messergebnisses auf den nächstliegenden Varianz-Referenzwert der mehreren Varianz-Referenzwerte in der RRC-Schicht der drahtlosen Kommunikationsvorrichtung, wenn das Varianz-Messergebnis geringer als der maximale Varianz-Referenzwert der mehreren Varianz-Referenzwerte ist,
Berichten des gerundeten Varianz-Messergebnisses an eine obere Schicht für eine dynamische Funkressourcensteuerung.

7. Kommunikationsvorrichtung nach Anspruch 6, **dadurch gekennzeichnet, dass** das Varianz-Messergebnis durch Messen einer Varianz von Daten, die in einem Pufferspeicher einer RLC-Einheit gespeichert sind, erhalten wird.

8. Kommunikationsvorrichtung nach Anspruch 6, **dadurch gekennzeichnet, dass** der maximale Varianz-Referenzwert der mehreren Varianz-Referenzwerte 16 KByte ist und K gleich 1024 ist.

9. Kommunikationsvorrichtung nach Anspruch 6, **dadurch gekennzeichnet, dass** die mehreren Varianz-Referenzwerte einen minimalen Varianz-Referenzwert von 0 aufweisen und die sich von dem minimalen Varianz-Referenzwert unterscheidenden mehreren Varianz-Referenzwerte eine geometrische Sequenz bilden.

10. Kommunikationsvorrichtung nach Anspruch 6, **dadurch gekennzeichnet, dass** das drahtlose Kommunikationssystem ein drahtloses Kommunikationssystem der dritten Generation ist.

## Revendications

1. Procédé de mesure de la variance d'une charge utile de données dans un système de communications sans fil, procédé comprenant :
- la prédétermination d'une pluralité de valeurs de référence de variance pour une variance de l'occupation d'un étage séparateur, dans laquelle l'occupation d'étage séparateur indique la quantité de données en nombre d'octets qui sont disponibles pour la transmission et la retransmission dans chaque canal logique de la couche RLC (Contrôle de Liaison Radio) d'un dispositif de communications sans fil (302) ; et
- la réception d'un résultat de mesure de variance pour l'occupation d'étage séparateur dans la couche RLC à partir de la couche MAC (Contrôle d'Accès au Support) (304) ;
- l'arrondissement dans la couche RRC (Contrôle de Ressource Radio) du dispositif de communications sans fil du résultat de mesure de variance vers le bas à une valeur maximale de référence de variance de la pluralité de valeurs de référence de variance si le résultat de mesure de variance est supérieur à la valeur maximale de référence de variance (306) ; et
- l'arrondissement dans la couche RRC du dispositif de communications sans fil du résultat de mesure de variance vers le haut à la plus proche valeur de référence de variance de la pluralité de valeurs de référence de variance si le résultat de mesure de variance est inférieur à la valeur maximale de référence de variance de la pluralité de valeurs de référence de variance ;
- le rapport du résultat arrondi de mesure de variance à une couche supérieure pour le contrôle dynamique de ressources radio.

2. Procédé selon la revendication 1, **caractérisé en ce que** le résultat de mesure de variance est obtenu par mesure d'une variance de données stockées dans une mémoire tampon d'une entité de contrôle radio.

3. Procédé selon la revendication 1, **caractérisé en ce que** la valeur maximale de référence de variance de la pluralité de valeurs de référence de variance est de 16K octets, et K vaut 1024.

4. Procédé selon la revendication 1, **caractérisé en ce que** la pluralité de valeurs de référence de variance possède une valeur minimale de référence de variance de 0, et la pluralité de valeurs de référence de variance différentes de la valeur minimale de référence de variance forment une séquence géométrique.

5. Procédé selon la revendication 1, **caractérisé en ce que** le système de communications sans fil est un système de communications sans fil de troisième génération.

6. Dispositif de communications (100) utilisé dans un système de communications sans fil pour la mesure de la variance de la charge utile de données afin d'empêcher des erreurs de mesure du volume de trafic, dispositif de communications comprenant :
- un circuit de contrôle (106) pour mettre en oeuvre des fonctions du dispositif de communications ;
- une unité centrale de traitement (108) installée dans le circuit de contrôle pour exécuter des codes de programme afin de faire fonctionner le circuit de contrôle ; et
- une mémoire (110) couplée à l'unité centrale de traitement pour stocker le code de programme ;
**caractérisé en ce que** le code de programme comprend :
- la prédétermination d'une pluralité de valeurs de référence de variance pour une variance de l'occupation d'un étage séparateur, dans laquelle l'occupation d'étage séparateur indique la quantité de données en nombre d'octets qui sont disponibles pour la transmission et la retransmission dans chaque canal logique de la couche RLC d'un dispositif de communications sans fil (302) ;
- la réception d'un résultat de mesure de variance pour l'occupation d'étage séparateur dans la couche RLC à partir de la couche MAC (304) ;
- l'arrondissement dans la couche RRC du dispositif de communications sans fil du résultat de mesure de variance vers le bas à une valeur maximale de référence de variance de la pluralité de valeurs de référence de variance si le résultat de mesure de variance est supérieur à la valeur maximale de référence de variance (306) ; et
- l'arrondissement dans la couche RRC du dispositif de communications sans fil du résultat de mesure de variance vers le haut à la plus proche valeur de référence de variance de la pluralité de valeurs de référence de variance si le résultat de mesure de variance est inférieur à la valeur maximale de référence de variance de la pluralité de valeurs de référence de variance ;
- le rapport du résultat arrondi de mesure de variance à une couche supérieure pour le contrôle dynamique de ressources radio.

7. Dispositif de communications selon la revendication 6, **caractérisé en ce que** le résultat de mesure de variance est obtenu par mesure d'une variance de données stockées dans une mémoire tampon d'une entité de contrôle radio.

8. Dispositif de communications selon la revendication 6, **caractérisé en ce que** la valeur maximale de référence de variance de la pluralité de valeurs de référence de variance est de 16K octets, et K vaut 1024.

9. Dispositif de communications selon la revendication 6, **caractérisé en ce que** la pluralité de valeurs de référence de variance possède une valeur minimale de référence de variance de 0, et la pluralité de valeurs de référence de variance différentes de la valeur minimale de référence de variance forment une séquence géométrique.

10. Dispositif de communications selon la revendication 6, **caractérisé en ce que** le système de communications sans fil est un système de communications sans fil de troisième génération.
